# EUROPEAN PATENT APPLICATION

(11) **EP 0 936 523 A1**
(43) Date of publication of application: **18.08.1999**
(21) Application number: 98203799.6
(22) Date of filing: 11.11.1998
(51) Int. Cl.: G05D 16/06

(54) **A device for regulating the delivery pressure of a gas**

(30) Priority: 17.02.1998 IT PD980000
(71) Applicant: SIT LA PRECISA S.r.l., I-35129 Padova (IT)
(72) Inventor: Fandella, Stefano, 31010 Tempio di Ormelle (TV) (IT); Veronese, Giuseppe, 35036 Montegrotto Terme (PD) (IT); Toniolo, Alessandro, 35129 Padova (IT)
(74) Representative: Cantaluppi, Stefano

(57) **Abstract**

The device described for regulating the delivery pressure of a gas is arranged to keep the delivery pressure substantially constant with variations in the flow-rate (Q) of gas delivered. The device comprises a regulation unit (7) with an adjustable, resilient actuator, means (14, 18) for adjusting the resilient load exerted on the actuator in order to vary the calibration of the device in dependence on the flow-rate (Q) of gas delivered, as well as indicator means (20, 25) associated with the means for adjusting the resilient load, for showing indices (26) indicative of adjustment values of the adjustment means (14, 18) predetermined and preselected in dependence on pre-established values or ranges of values of the flow-rate (Q) delivered.

## Description

The present invention relates to a device for regulating the delivery pressure of a gas, according to the preamble to the main claim.

As is well known, these devices are used for regulating the delivery pressure of gas to burners or similar items of equipment in order to keep the values of the delivery pressure substantially constant, apart from predetermined permitted tolerance ranges, with variations of the supply pressure.

Pressure regulators of the type indicated are normally intended to be fitted on items of equipment having various capacities and consequently requiring different flow-rates of gas.

These pressure regulators typically keep the delivery pressure to the burner substantially constant with variations in the supply pressure, whereas this pressure is typically affected appreciably by variations in the value of the flow-rate selected; in particular, the pressure tends to decrease as the power of the apparatus increases.

As a result, for each value of the flow-rate delivered, it is necessary to preset the pressure regulator in order to ensure a substantially constant delivery pressure equal to a predetermined optimal value for the operation of the equipment.

In order to satisfy this requirement, it is known, at the production stage, to provide a range of identical pressure regulators with different presettings so as to cover the values and/or the ranges of the flow-rate delivered in a very wide range of applications. However, the presetting operations are quite onerous in terms of the time taken and of the measurements to be made, as well as of storage management since it is necessary to provide a respective regulator with the corresponding presetting for each flow-rate value or range of values.

Pressure regulators of more complex and sophisticated designs, in which the delivery pressure is substantially insensitive to variations in the flow-rate delivered, are also known. However, these involve fairly onerous applications unsuitable for large-scale, relatively low-cost use such as that envisaged for the pressure regulators mentioned above.

The problem upon which the present invention is based is that of providing a device for regulating the delivery pressure of a gas, which is designed structurally and functionally to prevent all of the problems complained of with reference to the prior art mentioned.

This problem is solved by the invention by means of a pressure regulator formed in accordance with the following claims.

The characteristics and advantages of the invention will become clearer from the following detailed description of a preferred embodiment thereof, described by way of non-limiting example, with reference to the appended drawings, in which:
Figure 1 is a longitudinal section of a pressure regulator according to the invention,
Figure 2 is a plan view of the regulator of Figure 1, and
Figures 3 and 4 are graphs showing characteristic curves of the pressure regulator of the previous drawings.

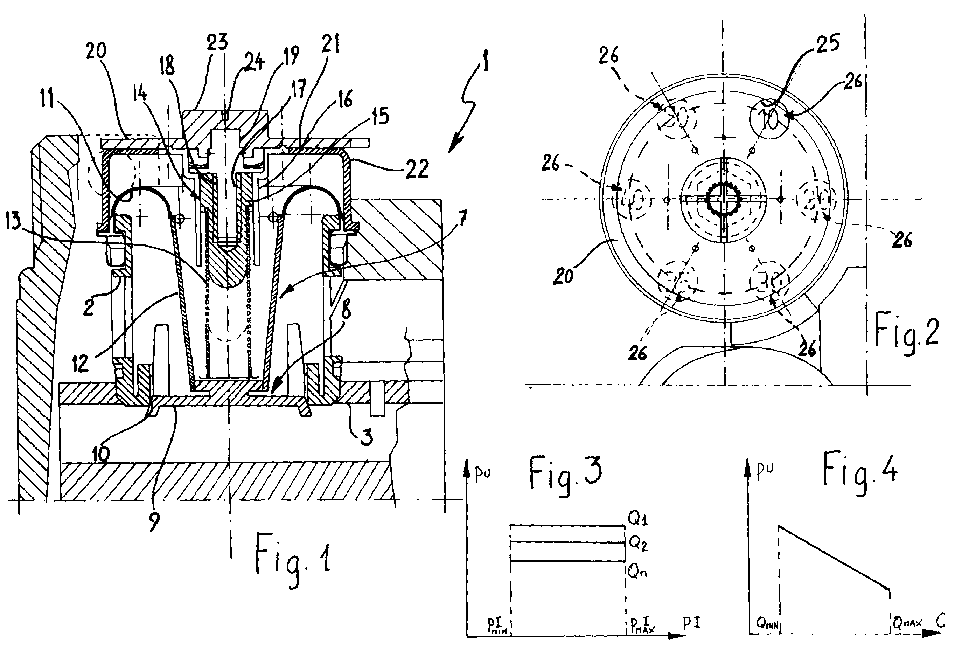

With reference to Figure 1, a device for regulating the delivery pressure pU of a gas supplied at a supply pressure pI through a supply duct 2 and delivered therefrom at the pressure pU through a delivery duct 3 is generally indicated 1.

The device 1 comprises a regulation unit, generally indicated 7, arranged for varying the calibration of the device so as to keep the delivery pressure pU substantially constant with variations in the flow-rate Q of gas delivered, as will be explained further in the following description. The term "calibration" is intended to define herein operations to preset the regulator which operations are necessary to ensure a preselected and optimal value of the delivery pressure pU, in operation, for each value or range of values of the flow-rate delivered, which in turn is selected in dependence on the capacity required.

The regulation unit 7 comprises a valve 8 interposed between the ducts 2 and 3 and including a closure element 9 which can close a valve seat 10 through which the flow Q of gas is delivered to a user such as a burner or similar equipment, not shown in the drawings.

The regulation unit 7 also has an adjustable, resilient actuator comprising a diaphragm 11 which is intended to operate the closure element 5 and is connected rigidly thereto by means of a connection element 12 and a spring 13.

One end of the spring 13 acts on the diaphragm 11 via the element 12 and its opposite end abuts an adjustable locator 14, permitting adjustment of the resilient preloading of the spring 13, to which the diaphragm 11, and consequently the closure element 5, are subject.

The adjustable locator 14 comprises an abutment element 15 for the spring, slidable axially in a guide 16 which is stationary relative to the device 1. In the element 15 there is a blind axial hole 17 into which the threaded portion of an adjustment screw 18 is screwed. At the opposite end to the threaded portion, the screw 18 has an operating head 19 the rotation of which causes axial sliding of the element 15 and a consequent variation in the resilient preloading of the spring 13.

In Figure 1, the adjustment locator 14 is shown in a first travel-limit position with the spring 13 fully extended and is shown only partially and in broken outline in a second travel-limit position with the spring 13 in the fully contracted position.

A disc 20 mounted on the head 19 is fixed for rotation with the screw 18 and bears against a surface 21 of a stationary element 22 of the regulator 1. The disc 20 has a central operating portion 23 having slots 24 for its rotation by means of a tool such as a screwdriver.

The disc 20 has a circular through window 25 through which one index 26 of a plurality of indices imprinted on the surface 21 of the device can be read. The indices 26 are arranged in a circle at predetermined angular intervals and each index 26 can be read as a result of a corresponding angular rotation of the disc 20 such as bring the window 25 to the position of the index. The indices 26 indicate values of the resilient regulation load of the regulation unit 7 which are predetermined and preselected in dependence on pre-established values or ranges of values of the flow-rate Q delivered, as will be explained in detail below. As a result, each index 26 can be read through the window 25 when the screw 18 is in a corresponding adjustment position. In Figure 2, the index 26 identified by the numeral 10 can be read through the window 25 and further positions adopted by the window 25 when it is rotated to the positions of the indices identified by the numerals 20, 30, 35, 40 and 50 are shown in broken outline.

When the device 1 is in operation, the delivery pressure pU is kept substantially constant with variations in the supply-pressure conditions for a pre-established value or range of values of the flow-rate Q delivered. The delivery pressure pU therefore depends on the resilient load exerted by the actuator of the regulation unit 7. Upon a change from one preselected flow-rate value to another, the delivery pressure pU tends to vary to a greater or lesser extent and, in particular, tends to decrease, the more the flow-rate delivered is increased. Figure 3 shows schematically a graph of the characteristic curves of the regulator 1 which express the behaviour of the delivery pressure pU as a function of the supply pressure pI for pre-established flow-rate values Q1, Q2, ... Qn. In order to keep the delivery pressure pU substantially constant and equal to a preselected value for each value or range of values of the flow-rate (Q1, ... Qn) delivered, it is therefore necessary to calibrate (preset) the regulator in order correspondingly to regulate the resilient load exerted by the actuator so as to bring the delivery pressure pU back to the desired value. Figure 4 shows the behaviour of the pressure pU with variations in the preselected flow-rate value. The adjustment values of the resilient load are obtained by respective angular rotations of the adjustment screw 18. An index 26 applied in these adjustment positions is indicative of the value or of the range of values of the flow-rate delivered (or of another significant parameter) for which the corresponding adjustment ensures that the desired delivery pressure is maintained. Each adjustment value of the resilient load is predetermined in dependence on a respective flow-rate Q and the corresponding index is applied to the device. The adjustment values are obtained by measurement of the delivery pressure at the presetting stage or, analytically, starting from a known adjustment value, by calculating the successive values with the use of the laws of variation of the resilient characteristics of the actuator. The indices 26 applied to the device thus identify each respective adjustment position. In operation, once the flow-rate Q to be delivered to the user has been selected, the disc 20 of the regulator is rotated to the angular adjustment position in which the index indicative of the desired flow-rate delivered can be read through the opening 25. The adjustment position selected in this manner is such as to ensure the required delivery pressure value pU, suitable for optimal operating conditions. Indicative indices may be values of the flow-rate delivered, or of the associated power or, as a further alternative, values connected with the actual flow-rates by proportionality factors.

The invention thus solves the problem set, achieving the aforementioned advantages in comparison with known solutions. In particular, it is clear that the pressure regulator according to the invention can be preset quickly, easily and accurately, in dependence on a preselected delivery flow-rate, without requiring any measurement of the delivery pressure.

## Claims

1. A device for regulating the delivery pressure of a gas, arranged to keep the delivery pressure substantially constant with variations of the flow-rate (Q) of gas delivered, the device comprising a regulation unit (7) with an adjustable, resilient actuator and means (14, 18) for adjusting the resilient load exerted on the actuator in order to vary the calibration of the device in dependence on the flow-rate of gas delivered, characterized in that it comprises indicator means (20, 25) associated with the means for adjusting the resilient load for showing indices (26) indicative of adjustment values of the adjustment means (14, 18) predetermined and preselected in dependence on pre-established values or ranges of values of the flow-rate (Q) delivered.

2. A device according to Claim 1, in which the regulation unit comprises at least one closure element (5) operated by a diaphragm (11) and the resilient actuator comprises the operating diaphragm (11) of the actuator and resilient means (13) acting on the diaphragm (11) in order to subject it to a resilient load adjustable by the adjustment means (18), the resilient load being selected in a manner such as to ensure a substantially constant value of the delivery pressure with variations in the flow-rate (Q) delivered.

3. A device according to Claim 2, in which the resilient means comprise at least one spring (13) acting on the diaphragm (11) and the means for adjusting the resilient load comprise an adjustable locator (14) for preloading the spring (13), the indicator means (20, 25) being connected to the locator in order to show the indices (26) in accordance with the adjustment position the locator (14).

4. A device according to Claim 3, in which the adjustable locator comprises a screw (18) constituting an abutment for locating the spring and the indicator means comprise a disc (20) fixed for rotation with the screw and having a window (25), the indices (26) being imprinted on a stationary element of the device and each of the indices (26) being readable through the window (25) when the screw (18) is in the respective adjustment position.

5. A device according to one or more of the preceding claims, in which the indices (26) are arranged in a circle and spaced angularly on the stationary element.

6. A device according to one or more of the preceding claims, in which the indices (26) are indicative of values of the power associated with a user supplied with the flow-rate delivered by the device.
